# EUROPÄISCHE PATENTSCHRIFT

(11) **EP 1 147 487 B1**
(45) Veröffentlichungstag und Bekanntmachung des Hinweises auf die Patenterteilung: **06.11.2002**
(21) Anmeldenummer: 00901556.1
(22) Anmeldetag: 13.01.2000
(51) Int. Cl.: G06K 19/07, H04L 27/06

(54) **VERFAHREN ZUR KONTAKTLOSEN DATENÜBERTRAGUNG UND TRANSPONDER FÜR EIN KONTAKTLOSES DATENÜBERTRAGUNGSSYSTEM**
METHOD FOR NON-CONTACTING DATA TRANSMISSION AND TRANSPONDER FOR A NON-CONTACTING DATA TRANSMISSION SYSTEM
PROCEDE DE TRANSMISSION DE DONNEES SANS CONTACT ET TRANSPONDEUR POUR UN SYSTEME DE TRANSMISSION DE DONNEES SANS CONTACT

(30) Priorität: 29.01.1999 EP 99101577
(43) Veröffentlichungstag der Anmeldung: 24.10.2001
(73) Patentinhaber: SIEMENS AKTIENGESELLSCHAFT, 80333 München (DE)
(72) Erfinder: SCHRAUD, Gerhard, D-86415 Mering (DE); NEBEL, Gerhard, D-87509 Immenstadt (DE)
(86) Internationale Anmeldenummer: EP0000242
(87) Internationale Veröffentlichungsnummer: WO00045329

(56) Entgegenhaltungen:
- WO-A-99/42948
- FR-A- 2 751 148
- PATENT ABSTRACTS OF JAPAN vol. 013, no. 123 (E-733), 27. März 1989 (1989-03-27) & JP 63 292805 A (MATSUSHITA ELECTRIC WORKS LTD), 30. November 1988 (1988-11-30)
- PATENT ABSTRACTS OF JAPAN vol. 016, no. 547 (P-1452), 17. November 1992 (1992-11-17) & JP 04 205586 A (MITSUBISHI HEAVY IND LTD), 27. Juli 1992 (1992-07-27)

## Beschreibung

Die vorliegende Erfindung betrifft ein Verfahren zur kontaktlosen Datenübertragung zwischen einem Transponder, insbesondere einer Chipkarte, und einer Schreib/Lesestation.

Für die Datenübertragung zwischen einer Chipkarte und einer Schreib/Lesestation existieren bereits Normen, wie die ISO 14443, die teilweise noch in Bearbeitung sind. Diese Normen regeln unter anderem, die Modulationsart der zwischen der Karte und der Schreib/Lesestation übertragenen HF-Signale und deren Trägerfrequenz sowie die Kodierung der übertragenen Daten.

Die Norm ISO 14443 sieht vor, für die Datenübertragung HF-Signale zu verwenden, denen die zu übertragenden Daten gemäß einer ASK-Modulation (ASK = amplitude shift keying) aufmoduliert sind. Dabei wechselt das HF-Signal abhängig von dem zu übertragenden Datensignal zwischen einem oberen und einem unteren Amplitudenwert. Es sind zwei Modulationsverfahren vorgesehen, deren Signale sich jeweils im Modulationsgrad unterscheiden. Der Modulationsgrad berechnet sich dabei aus dem Quotienten zwischen Differenz und Summe des oberen und unteren Amplitudenwerts. Bei der sogenannten ASK100%-Modulation, die auch als harte Tastung oder On-Off-Keying bezeichnet wird, beträgt die untere Amplitude Null, der Modulationsgrad damit 100%, das HF-Signal wird somit abhängig vom Datensignal vollständig abgeschaltet. Bei einem weiteren Verfahren, das den Arbeitstitel ASK10% trägt, beträgt der Modulationsgrad zwischen 5% und 15% und der untere Amplitudenwert damit zwischen ca. 74% und 90% des oberen Amplitudenwerts. Die Modulation ASK10% besitzt gegenüber der Modulation ASK100% den Vorteil, daß das Spektrum der zu übertragenden Signale schmalbandiger ist, sie besitzt jedoch den Nachteil höherer Störanfälligkeit und damit einer geringeren möglichen Übertragungsdistanz zwischen Schreib/Lesestation und Transponder.

Zur Verarbeitung des modulierten Energiesignals weisen bekannte Chipkarte folgende Komponenten auf: einen Empfänger zum Empfang des modulierten HF-Signals, eine dem Empfänger nachgeschaltete Signalverarbeitungseinheit zur Gewinnung des Datensignals aus dem HF-Signal mittels Demodulation und Dekodierung und eine Datenverarbeitungseinheit, der das Datensignal zuführbar ist.

Neben der Übertragung des aufmodulierten Datensignals dient das HF-Signal zur Spannungsversorgung der Chipkarte. Das HF-Signal wird hierzu in der Signalverarbeitungseinheit gleichgerichtet und einer Spannungsregelanordnung zugeführt, die Schwankungen der Empfangsleistung des HF-Signals ausregelt, um eine möglichst konstante Versorgungsspannung zur Verfügung zu stellen.

Nachteilig ist, daß Spannungsregler zur Erzeugung einer Versorgungsspannung aus einem ASK10%-moduliert Signal und Spannungsregler zur Erzeugung einer Versorgungsspannung aus einem ASK100%-modulierten Signal nicht kompatibel sind. Insbesondere ein Regler für ASK10% ist nicht geeignet, Signale einer ASK100%-Modulation zu verarbeiten. Bei dieser Modulationsart treten Signalpausen auf, während bei der ASK10%-Modulation eine Absenkung der Signalamplitude auf minimal 74% auftritt. Der ASK10%-Regler ist nicht für derartige Signalpausen ausgelegt und nicht in der Lage bei Empfang ASK100%modulierter HF-Signale die Versorgungsspannung sicher aufrechtzuerhalten.

Bislang sind daher lediglich Verfahren zur kontaktlosen Datenübertragung bekannt, bei denen der Transponder in der Lage ist, HF-Signale zu verarbeiten, die gemäß einer der Modulationsarten ASK100% oder ASK10% moduliert sind. Werden auf dem Transponder Schaltungsmaßnahmen für verschieden modulierte und/oder kodierte HF-Signale vorgesehen, ergibt sich insbesondere das Problem, die Modulations- und/oder Kodierungsart der empfangenen HF-Signale zu erkennen und den Transponder auf die Verarbeitung des erkannten Signals einzustellen.

Dokument FR-A-2 751 148 offenbart einen Demodulator für ein amplitudenmoduliertes Signal, das durch elektromagnetische Induktion in einer Spule empfangen wird, wobei die Spule mit einem Spannungsbegrenzer versehen ist, der sich einschaltet, wenn die in der Spule induzierte Spannung höher ist als ein vorbestimmter Schwellwert. Der Demodulator enthält einen ersten Demodulator zum Demodulieren der induzierten Spannung, der ein erstes demoduliertes Signal liefert, einen zweiten Demodulator zum Demodulieren eines beim Betrieb des Spannungsbegrenzers auftretenden Grenzstromes, der ein zweites demoduliertes Signal liefert, und Mittel zum Auswählen des ersten oder zweiten demodulierten Signals. Durch den zweiten Demodulator, der gleichzeitig mit dem Spannungsbegrenzer aktiv ist, können Signalfehler, die durch Sättigung der in der Spule induzierten Spannung hervorgerufen werden, vermieden und die Datenübertragungsgeschwindigkeit aufrecht erhalten werden. Der Demodulator ist insbesondere für Chip-Karten und elektronische Labels geeignet.

Ziel der vorliegenden Erfindung ist es, ein verbessertes kontaktloses Übertragungsverfahren zur Verfügung zu stellen, bei welchem ein Transponder in der Lage ist, unterschiedlich modulierte und/oder kodierte HF-Signale, insbesondere ASK100%- und ASK10%-modulierte Signale zu verarbeiten, so daß sich insbesondere die oben genannten Nachteile nicht ergeben.

Dieses Ziel wird durch ein Verfahren gemäß Patentanspruch 1 gelöst.

Das Verfahren sieht vor, einen Transponder zur Verfügung zu stellen, der folgende Merkmale aufweist: eine Empfangseinheit zum Empfang eines modulierten HF-Signals und eine der Empfangseinheit nachgeschaltete Signalverarbeitungseinheit mit Mitteln zur Verarbeitung von wenigstens zwei unterschiedlich modulierten und/oder kodierten HF-Signalen, wobei an einem ersten Ausgangsklemmenpaar eine Versorgungsspannung und an einer zweiten Ausgangsklemme ein aus dem HF-Signal gewonnenes Datensignal zur Verfügung steht. Eine Datenverarbeitungseinheit ist verfahrensgemäß zur Spannungsversorgung an das Ausgangsklemmenpaar der Signalverarbeitungseinheit angeschlossen. Die Datenverarbeitungseinheit ist weiterhin mittels einer Ausgangsklemme an die Signalverarbeitungseinheit angeschlossen, um diese anzusteuern und auf die Verarbeitung unterschiedlich modulierter und/oder kodierter HF-Signale einzustellen.

Bei Aufbau der Versorgungsspannung liegt in der Datenverarbeitungseinheit zunächst keine Information vor, in welcher Weise das den Aufbau der Versorgungsspannung bewirkende HF-Signal moduliert und/oder kodiert ist. Das erfindungsgemäße Verfahren sieht hierfür vor, bei Empfang eines HF-Signals und

Beginn des Aufbaus einer Versorgungsspannung an der Datenverarbeitungseinheit, mittels der Datenverarbeitungseinheit die Signalverarbeitungseinheit in vorzugsweise zyklischen Zeitabständen auf die Verarbeitung unterschiedlich modulierter und/oder kodierter HF-Signale einzustellen, bis durch die Datenverarbeitungseinheit der Empfang eines vorgegebenen Datensignals registriert wird. Der Empfang dieses vorgegebenen Datensignals, welches vorzugsweise ein zwischen der Schreib/Lesestation und dem Transponder vereinbartes Request-Signal ist, zeigt der Datenverarbeitungseinheit an, daß der gerade an der Signalverarbeitungseinheit eingestellte Verarbeitungsmodus korrekt ist.

Vorteilhafte Ausgestaltungen der Erfindung sind Gegenstand der Unteransprüche.

Eine Ausführungsform der Erfindung sieht vor, daß die Signalverarbeitungseinheit auf die Verarbeitung von ASK10%-modulierten und ASK100%-modulierten Signalen einstellbar ist und daß die Signalverarbeitungseinheit bei Anliegen einer Versorgungsspannung zunächst auf die Verarbeitung ASK100%-modulierter Signale eingestellt wird. Die Signalverarbeitungseinheit weist vorzugsweise eigene Schaltmittel, insbesondere Demodulations- und Dekodierungseinheiten und Spannugsregler, für jede Modulations- und/oder Kodierungsart der zu verarbeitenden HF-Signale auf. Die Einstellung der Signalverarbeitungseinheit auf eine dieser Modulations- und/oder Kodierungsarten erfolgt dabei vorzugsweise durch Anschalten der benötigten und Abschalten der nicht benötigten Schaltmittel. Der Spannungsregler für ASK100%-modulierte Signale ist auch in der Lage, eine Versorgungsspannung aus einem ASK10%-modulierten Signal zu erzeugen. Die anfängliche Einstellung auf die Verarbeitung ASK100%-modulierter Signale gewährleistet damit, daß die Spannungsversorgung der Datenverarbeitungseinheit auch bei Empfang eines ASK10%-modulierten HF-Signals sichergestellt ist. Wird innerhalb einer vorgegebenen Zeit kein gültiges Datensignal von der Datenverarbeitungseinheit erkannt, wird davon ausgegangen, daß es sich bei dem empfangenen HF-Signal um ein ASK10%-moduliert Signal handelt und die Signalverarbeitungseinheit auf die Verarbeitung dieser Signale umgestellt.

Bei dem durch die Datenverarbeitungseinheit zu erkennenden, vorgegebenen Datensignal handelt es sich vorzugsweise um ein sogenanntes Request-Signal, welches von der Schreib/Lesestation in festen zeitlichen Abständen zur Kontaktaufnahme mit einem Transponder ausgesandt wird. Die zeitlichen Abstände, in denen die Datenverarbeitungseinheit die Signalverarbeitungseinheit auf eine andere Modulations- und/oder Kodierungsart umstellt bis ein gültiges Datensignal erkannt wird, sind vorzugsweise länger als der zeitliche Abstand zwischen zwei Request-Signalen.

Gegenstand der Erfindung ist des weiteren ein Transponder zur kontaktlosen Datenübertragung gemäß den Patentansprüchen 10 bis 21, mit welchem das erfindungsgemäße Verfahren durchführbar ist.

Der erfindungsgemäße Transponder weist eine Empfangseinheit zum Empfang eines modulierten HF-Signals, eine der Empfangseinheit nachgeschaltete Signalverarbeitungseinheit mit einem ersten Ausgangsklemmenpaar zur Bereitstellung einer Versorgungsspannung und mit wenigstens einer zweiten Ausgangsklemme zur Bereitstellung eines aus dem modulierten HF-Signals gewonnnen Datensignals auf, wobei die Signalverarbeitungseinheit Mittel zur Verarbeitung von wenigstens zwei unterschiedlich modulierten und/oder kodierten HF-Signalen aufweist. Des weiteren weist der Transponder eine an das Ausgangsklemmenpaar der Signalverarbeitungseinheit angeschlossene Datenverarbeitungseinheit auf, der das Datensignal zuführbar ist, und mit wenigstens einer ersten Ausgangsklemme, die an die Signalverarbeitungseinheit zur Einstellung der Modulationsart und/oder Kodierungsart der zu verarbeitenden Signale angeschlossen ist.

Die Datenverarbeitungseinheit ist vorzugsweise als Mikroprozessor mit einem in einem ROM oder EEPROM abgelegten Mikroprogramm zur Ansteuerung der Signalverarbeitungseinheit ausgebildet. Ist die Signalverarbeitungseinheit derart ausgebildet, daß Schaltmittel zur Verarbeitung einer Vielzahl unterschiedlich modulierter und/oder kodierter HF-Signale vorhanden sind, so bietet diese Ausführungsform den Vorteil, daß der Transponder mittels Software auf die Verarbeitung ausgewählter HF-Signale konfigurierbar ist. Derselbe Hardware-Aufbau des Transpnders kann dann für unterschiedliche Übertragungsverfahren verwendet werden.

Die Erfindung wird nachfolgend anhand von Ausführungsbeispielen in Figuren näher erläutert. Es zeigen:
- Figur 1:: Blockschaltbild des erfindungsgemäßen Transponders zur Durchführung des erfindungsgemäßen Verfahrens;
- Figur 2:: Blockschaltbild des erfindungsgemäßen Transponders mit Darstellung des schematischen Aufbaus der Signalverarbeitungseinheit.

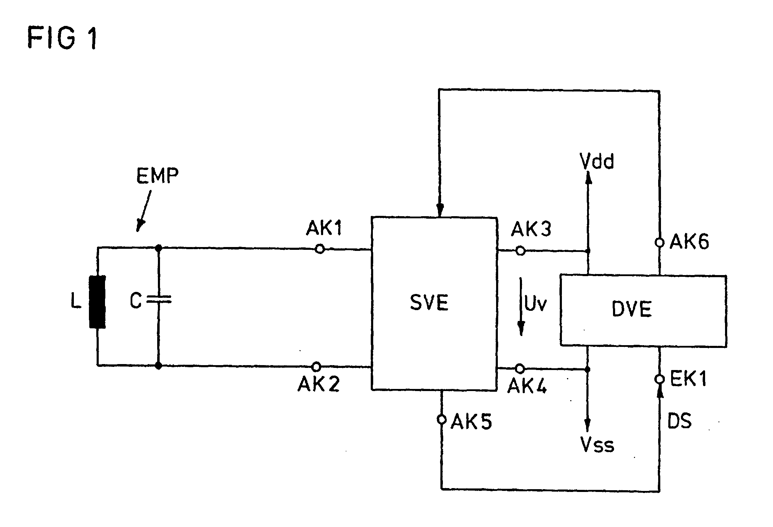

Figur 1 zeigt den schematischen Aufbau eines Transponders zur Durchführung des erfindungsgemäßen Verfahrens.

Der Transponder besitzt eine Empfangseinheit EMP mit einem Eingangsschwingkreis aus einer Spule L und einer parallelen Kapazität C, zum Empfang eines HF-Signals, dem ein Datensignal aufmoduliert ist. An Ausgangsklemmen AK1, AK2 der Empfangseinheit EMP ist eine Signalverarbeitungseinheit SVE angeschlossen, die zur Bereitstellung einer Versorgungsspannung Uv an einem Ausgangsklemmenpaar AK3, AK4 und zur Bereitstellung eines aus dem HF-Signal gewonnenen Datensignal DS an einer zweiten Ausgangsklemme AK5 dient. Eine Datenverarbeitungseinheit DVE ist an das Ausgangsklemmenpaar AK3, AK4 zur Spannungsversorgung angeschlossen. Der Datenverarbeitungseinheit DVE ist weiterhin das Datensignal DS an einer Eingangsklemme zuführbar.

Die Signalverarbeitungseinheit ist dazu ausgebildet, wenigstens zwei unterschiedlich modulierte und/oder kodierte HF-Signale zu verarbeiten, also eine Versorgungsspannung aus dem HF-Signal abzuleiten und ein Datensignal DS durch Demodulation und Dekodierung aus dem HF-Signal zu gewinnen. Die Signalverarbeitungseinheit SVE ist an eine Ausgangsklemme AK6 der Datenverarbeitungseinheit DVE angeschlossen. Durch die Datenverarbeitungseinheit DVE wird in der Signalverarbeitungseinheit SVE über diesen Anschluß die Modulationsart und/oder die Kodierungsart der zu verarbeitenden HF-Signale eingestellt.

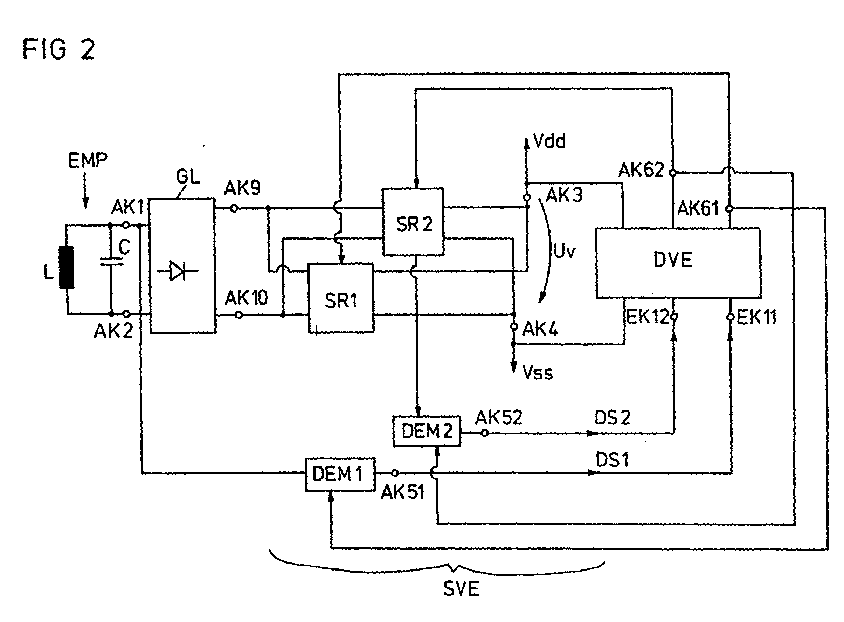

Figur 2 zeigt zusätzlich schematisch den inneren Aufbau einer Signalverarbeitungseinheit SVE, die zur Verarbeitung von wenigstens zwei unterschiedlich modulierten und/oder kodierten Signalen, insbesondere zur Verarbeitung von ASK100%-modulierten Signalen und ASK10%-modulierten Signalen ausgelegt ist. Die Signalverarbeitungseinheit SVE weist einen an die Ausgangsklemmen AK1, AK2 der Empfangseinheit EMP angeschlossenen Gleichrichter GL auf, dem an Ausgangsklemmen AK9, AK10 ein erster und zweiter Spannungsregler SR1, SR2 nachgeschaltet ist, wobei die Spannungsregler SR1, SR2 parallel geschaltet sind. Ausgangsklemmen der Spannungsregler SR1, SR2 sind dabei an die Ausgangsklemmen AK3, AK4 der Signalverarbeitungseinheit SVE zur Bereitstellung der Versorgungsspannung Uv angeschlossen.

Der erste Spannungsregler SR1 dient dabei zur Bereitstellung der Versorgungsspannung Uv aus einem auf eine erste Weise modulierten Signal, insbesondere einem ASK100%-modulierten Signal, der zweite Spannungsregler dient zur Bereitstellung der Versorgungsspannung aus einem auf eine zweite Weise modulierten Signal, insbesondere einem ASK10%-modulierten Signal. Die Spannungsregler SR1, SR2 sind über Ausgangsklemmen AK61, AK62 der Datenverarbeitungseinheit DVE ansteuerbar, insbesondere an- und abschaltbar. Vorzugsweise ist dabei nur der Spannungsregler SR1; SR2 aktiv, der zur Verarbeitung des zu empfangenden HF-Signals geeignet ist.

Die Signalverarbeitungseinheit SVE weist weiterhin eine erste Demodulations- und Dekodierungseinheit DEM1 und eine zweite Demodulations- und Dekodierungseinheit DEM2 auf. Die erste Demodulations- und Dekodierungseinheit DEM1 ist dabei zur Demodulation eines auf eine erste Weise modulierten Signals, insbesondere eines ASK100%-modulierten Signals ausgelegt, die zweite Demodulations- und Dekodierungseinheit DEM2 ist zur Demodulation eines auf eine zweite Weise demodulierten Signals, insbesondere eines ASK10% modulierten Signals ausgelegt. In den Demodulations- und Dekodierungseinheiten DEM1, DEM2 erfolgt auch eine Dekodierung der empfangenen demodulierten HF-Signale, wobei in dem vorliegenden Beispiel davon ausgegangen ist, daß die unterschiedlich modulierten Signale unterschiedlich kodiert sind, so daß in jeder Demodulationsund Dekodierungseinheit DEM1, DEM2 ein Dekodierer vorgesehen ist. Sind die den HF-Signalen aufmodulierten Datensignale in derselben Weise kodiert aber auf verschiedene Weise aufmoduliert, könnte den Demodulations- und Dekodierungseinheiten DEM1, DEM2 ein Dekodierer gemeinsam zur Verfügung stehen.

Die zur Demodulation von ASK100%-modulierten Signalen geeignete erste Demodulations- und Dekodierungseinheit DEM1 ist an die Ausgangsklemme AK1 des Empfängers angeschlossen. Die Demodulation derartiger Signale erfolgt dabei durch Zählen der empfangenen Signalschwingungen und Erfassen der Signalpausen. Die zur Demodulation von ASK10%-modulierten Signalen geeignete zweite Demodulations- und Dekodierungseinheit DEM2 ist an eine Ausgangsklemme des Spannungsreglers SR2 angeschlossen. Die Demodulation erfolgt bei dieser Modulationsart durch die Erfassung von Stromschwankungen in dem Spannungsregler SR2, die durch die aufmodulierten Datensignale hervorgerufen werden.

Ausgangsklemmen AK51, AK52 der Demodulations- und Dekodierungseinheiten DEM1, DEM2 sind an Eingangsklemmen EK11, EK12 zur Zuführung eines durch Demodulation und Dekodierung aus dem HF-Signal gewonnenen Datensignals DS1, DS2 angeschlossen. Die Demodulations- und Dekodierungseinheiten DEM1, DEM2 sind über die Ausgangsklemmen AK61, AK62 der Datenverarbeitungseinheit DVE ansteuerbar, wobei vorzugsweise über diese Ausgangsklemmen AK61, AK62 nur die Demodulations- und Dekodierungseinheit DEM1; DEM2 aktiviert wird, die zur Verarbeitung des zu empfangenden Signals erforderlich ist.

Die Ansteuerung der Signalverarbeitungseinheit SVE durch die Datenverarbeitungseinheit mittels des erfindungsgemäßen Verfahrens erfolgt für den dargestellten Transponder wie im folgenden erläutert wird.

Wird der Transponder in den Sendebereich einer HF-Signale aussendenden Schreib/Lesestation gebracht und ein HF-Signal von dem Empfänger empfangen, beginnt sich zwischen den Ausgangsklemmen AK3, AK4 der Signalverarbeitungseinheit eine Versorgungsspannung aufzubauen. Dabei können nur einer oder beide Spannungsregler SR1, SR2 aktiv sein. Mit Anliegen einer Versorgungsspannung Uv an der Datenverarbeitungseinheit DVE wird diese aktiviert und steuert die Signalverarbeitungseinheit SVE derart an, daß nur ein auf eine Weise moduliertes und/oder kodiertes HF-Signal verarbeitet werden kann. Dies erfolgt vorzugsweise dadurch, daß der Spannungsregler SR1; SR2 und die Demodulations- und Dekodierungseinheit DEM1; DEM2, die zur Verarbeitung des erwarteten Signals nicht benötigt werden, abgeschaltet wird. Die Signalverarbeitungseinheit wird dabei vorzugsweise zuerst auf die Verarbeitung eines ASK100%-modulierten HF-Signals eingestellt, indem der erste Spannungsregler SR1 und die erste Demodulations- und Dekodierungseinheit DEM1 aktiviert werden. Der für die Verarbeitung von ASK100%-modulierten Signalen ausgelegte erste Spannungsregler SR1 ist auch in der Lage, aus einem ASK10%-modulierten Signal eine Versorgungsspannung zur Verfügung zu stellen, so daß die Spannungsversorgung der Datenverarbeitungseinheit DVE auch sichergestellt ist, wenn ein ASK10%-moduliertes Signal empfangen wird, während die Signalverarbeitungseinheit auf die Verarbeitung von ASK100%-modulierten Signalen eingestellt ist. Die Demodulations- und Dekodierungseinheiten DEM1, DEM2 sind jedoch nicht dazu ausgelegt, HF-Signale der jeweils anderen Modulations- und/oder Kodierungsart zu verarbeiten.

Empfängt die Datenverarbeitungseinheit DVE innerhalb eines vorgegebenen Zeitraums kein gültiges Datensignal, welches insbesondere ein Request-Signal einer Schreib/Lesestation ist, schaltet die Datenverarbeitungseinheit DVE die Signalverarbeitungseinheit SVE auf die Verarbeitung eines auf andere Weise modulierten HF-Signals, im vorliegenden Beispiel auf die Verarbeitung eines ASK10%-modulierten Signals um, da dann davon ausgegangen wird, daß die eingestellte Modulationsart und/oder Kodierungsart nicht korrekt ist. Die Zeitdauer nach der eine Umschaltung erfolgt ist dabei vorzugsweise größer als die Zeitdauer zwischen zwei Request-Signalen, um sicherzustellen, daß auch ein derartiges Signal während der Wartezeit der Datenverarbeitungseinheit DVE ausgesendet wurde.

Eine Umschaltung auf die jeweils andere Modulations- und/oder Kodierungsart erfolgt vorzugsweise in zyklischen Zeitabständen, bis ein gültiges Datensignals durch die Datenverarbeitungseinheit empfangen wird. Wird ein derartiges Signal empfangen, ist sichergestellt, daß die eingestellte Modulations- und/oder Kodierungsart korrekt ist. Der Transponder kann dann der Schreib/Lesestation über eine nicht näher dargestellte Sendeeinheit antworten, um eine Datenübertragung zu beginnen.

Die Anzahl der möglichen Modulations- und/oder Kodierungsarten, der HF-Signale, die mit dem erfindungsgemäßen Transponder und dem erfindungsgemäßen Verfahren verarbeitbar sind, ist dabei keineswegs auf zwei begrenzt. Vielmehr können in der Signalverarbeitungseinheit Schaltmittel, insbesondere Spannungsregler und Demodulations- und Dekodierungseinheiten für eine Vielzahl unterschiedlich modulierter und/oder kodierter HF-Signale vorgesehen werden.

Die Datenverarbeitungseinheit DVE ist insbesondere als Mikroprozessor ausgebildet, dessen Programm in einem ROM oder EEPROM abgelegt ist. Der Transponder kann so für verschiedenen Einsatzzwecke bei identischem Hardwareaufbau, insbesondere bei identischem Aufbau der Signalverarbeitungseinheit SVE konfiguriert werden. Soll der Transponder beispielsweise nur dann eine Kommunikation mit einer Schreib/Lesestation beginnen, wenn ein ASK10%-moduliertes HF-Signal empfangen wird, besteht die Möglichkeit durch reine Softwaremaßnahmen, die Verarbeitung von ASK100%-modulierten Signalen zu verhindern. Diese Ausführungsform bietet des weiteren den Vorteil, daß die Funktionsweise des Transponders zu einem späteren Zeitpunkt durch eine reine Softwareänderung geändert werden kann, was den Kosten- und Zeitaufwand gering hält.

In der Datenverarbeitungseinheit DVE sind vorzugsweise ein Vergleicher zum Vergleich des Datensignals DS, DS1, DS2 mit einem Sollsignal vorgesehen. Der Zähler wird bei Anliegen einer Versorgungsspannung Uv an der Datenverarbeitungseinheit auf einen Anfangszählerstand gesetzt und gestartet. Liefert der Vergleicher bis zum Erreichen eines Endzählerstandes kein Ergebnis derart, daß ein Sollsignal, welches einem erwarteten gültigen Datensignal entspricht, empfangen wurde, wird die Signalverarbeitungseinheit umgeschaltet und der Zähler wieder auf den Anfangszählerstand gesetzt. Die Umschaltung der Signalverarbeitungseinheit SVE erfolgt dabei vorzugsweise zyklisch solange bis der Vergleicher den Empfang eines gültigen Signals anzeigt.

## Patentansprüche

1. Verfahren zur kontaktlosen Datenübertragung, das folgende Verfahrensschritte aufweist:
- Bereitstellen eines Transponders mit folgenden Merkmalen: einer Empfangseinheit (EMP) zum Empfang eines modulierten HF-Signals, einer der Empfangseinheit nachgeschalteten Signalverarbeitungseinheit (SVE) mit Mitteln (SR1, SR2, DEM1, DEM2) zur Verarbeitung von wenigstens zwei unterschiedlich modulierten und/oder kodierten HF-Signalen, zur Bereitstellung einer Versorgungsspannung (Uv) und zur Bereitstellung eines aus dem modulierten HF-Signal erzeugten Datensignals (DS, DS1, DS2), und einer an die Versorgungsspannung (Uv) anschließbaren Datenverarbeitungseinheit (DVE), der das Datensignal (DS, DS1, DS2) zuführbar ist und die an die Signalverarbeitungseinheit (SVE) zur Einstellung der Modulationsart und/oder Kodierungsart der zu verarbeitenden HF-Signale angeschlossen ist;
- Einstellen der Signalverarbeitungseinheit (SVE) auf die Verarbeitung unterschiedlich modulierter und/oder kodierter HF-Signale in zeitlicher Abfolge ab Anliegen einer Versorgungsspannung (Uv) bis in der Datenverarbeitungseinheit (DVE) der Empfang eines vorgegebenen Datensignals erkannt wird.

2. Verfahren nach Anspruch 1,
**dadurch gekennzeichnet, daß**
die Signalverarbeitungseinheit (SVE) auf die Verarbeitung von ASK10%-modulierten Signalen und ASK100%-modulierten Signalen einstellbar ist.

3. Verfahren nach Anspruch 2,
**dadurch gekennzeichnet, daß**
bei Anliegen einer Versorgungsspannung (Uv) an der Datenverarbeitungseinheit (DVE) die Signalverarbeitungseinheit (SVE) zuerst auf die Verarbeitung ASK100%-modulierter Signale eingestellt wird.

4. Verfahren nach einem der vorangehenden Ansprüche,
**dadurch gekennzeichnet, daß**
das vorgegebene Datensignal ein von einer Schreib/Leseeinheit in vorbestimmten Zeitabständen ausgesandtes Request-Signal ist.

5. Verfahren nach einem der vorangehenden Ansprüche,
**dadurch gekennzeichnet, daß**
die Signalverarbeitungseinheit (SVE) bis zur Detektion des vorgegebenen Signals jeweils für vorgegebene Zeitdauern auf eine Modulations- und/oder Kodierungsart eingestellt wird, wobei diese Zeitdauer länger ist als der zeitliche Abstand zwischen zwei Request-Signalen.

6. Verfahren nach einem der vorangehenden Ansprüche,
**dadurch gekennzeichnet, daß**
mit Anliegen einer Versorgungsspannung (Uv) an der Datenverarbeitungseinheit (DVE) ein Zähler ab einem definierten Anfangszählerstand zu laufen beginnt und daß die Signalverarbeitungseinheit (SVE) auf eine andere Modulationsart und/oder Kodierungsart eingestellt wird, wenn bei Erreichen eines Endzählerstandes das vorgegebene Signal nicht erkannt wurde.

7. Verfahren nach einem der vorangehenden Ansprüche,
**dadurch gekennzeichnet, daß**
die Signalverarbeitungseinheit (SVE) zyklisch auf unterschiedliche Modulationsarten und/oder Kodierungsarten eingestellt wird.

8. Verfahren nach einem der vorangehenden Ansprüche,
**dadurch gekennzeichnet, daß**
die Einstellung der Modulationsart und/oder Kodierungsart durch Ansteuern von Demodulations- und Dekodierungseinheiten (DEM1, DEM2) und Spannungsreglern (SR1, SR2) in der Signalverarbeitungseinheit (SVE) erfolgt.

9. Verfahren nach einem der vorangehenden Ansprüche,
**dadurch gekennzeichnet, daß**
das Verfahren gesteuert durch eine in der Datenverarbeitungseinheit (DVE) gespeicherte Software abläuft.

10. Transponder für ein kontaktloses induktives Datenübertragungssystem, der folgende Merkmale aufweist:
- eine Empfangseinheit (EMP) zum Empfang eines modulierten HF-Signals;
- eine der Empfangseinheit (EMP) nachgeschaltete Signalverarbeitungseinheit (SVE) mit einem ersten Ausgangsklemmenpaar (AK3, AK4) zur Bereitstellung einer Versorgungsspannung (Uv) und mit wenigstens einer zweiten Ausgangsklemme (AK5) zur Bereitstellung eines aus dem modulierten HF-Signal gewonnnen Datensignals (DS, DS1, DS2), wobei die Signalverarbeitungseinheit (SVE) Mittel (DEM1, DEM2, SR1, SR2) zur Verarbeitung von wenigstens zwei unterschiedlich modulierten und/oder kodierten HF-Signalen aufweist;
- eine an das Ausgangsklemmenpaar (AK3, AK4) der Signalverarbeitungseinheit (SVE) angeschlossene Datenverarbeitungseinheit (DVE), der das Datensignal (DS, DS1, DS2) zuführbar ist, und mit wenigstens einer ersten Ausgangsklemme (AK6, AK61, AK62, AK71, AK72), die an die Signalverarbeitungseinheit (SVE) zur Einstellung der Modulationsart und/oder Kodierungsart der zu verarbeitenden Signale angeschlossen ist.

11. Transponder nach Anspruch 10,
**dadurch gekennzeichnet, daß**
die Datenverarbeitungseinheit (DVE) einen Zähler aufweist und daß die Signalverarbeitungseinheit (SVE) abhängig von dem Zählerstand ansteuerbar ist.

12. Transponder nach Anspruch 10 oder 11,
**dadurch gekennzeichnet, daß**
die Signalverarbeitungseinheit (SVE) abhängig von einer Detektion eines vorgegebenen Datensignals in der Datenverarbeitungseinheit (DVE) ansteuerbar ist.

13. Transponder nach Anspruch 12,
**dadurch gekennzeichnet, daß**
das vorgegebene Datensignal (DS) ein von einer Sendeeinheit zur Aufnahme einer Kommunikation mit dem Transponder übermitteltes Request-Signal ist.

14. Transponder nach einem der vorangehenden Ansprüche,
**dadurch gekennzeichnet, daß**
der Empfänger einen Eingangsschwingkreis (L, C) und einen Gleichrichter (GL) aufweist.

15. Transponder nach einem der vorangehenden Ansprüche,
**dadurch gekennzeichnet, daß**
die Signalverarbeitungseinheit (SVE) einen ersten und zweiten Spannugsregler (SR1, SR2) zur Bereitstellung der Versorgungsspannung (Uv) und eine erste und zweite Demodulations- und Dekodiereinheit (DEM1, DEM2) zur Bereitstellung des Datensignals (DS1, DS2) aufweist.

16. Transponder nach einem der vorangehenden Ansprüche,
**dadurch gekennzeichnet, daß**
der erste Spannungsregler (SR1) zur Verarbeitung von modulierten Energiesignalen mit einem ersten Modulationsgrad und daß der zweite Spannungsregler (SR2) zur Verarbeitung von modulierten Energiesignalen mit einem zweiten Modulationsgrad ausgebildet ist.

17. Transponder nach einem der vorangehenden Ansprüche,
**dadurch gekennzeichnet, daß**
die erste Demodulations- und Dekodiereinheit (DEM1) zur Verarbeitung von modulierten Energiesignalen mit einem ersten Modulationsgrad und daß die zweite Demodulations- und Dekodiereinheit (DEM2) zur Verarbeitung von modulierten Energiesignalen mit einem zweiten Modulationsgrad ausgebildet ist.

18. Transponder nach Anspruch 16 oder 17,
**dadurch gekennzeichnet, daß**
die Modulation der Energiesignale eine ASK-Modulation ist und der erste Modulationsgrad 100% und der zweite Modulationsgrad kleiner als 100%, vorzugsweise zwischen 5% und 15%, ist.

19. Transponder nach einem der vorangehenden Ansprüche,
**dadurch gekennzeichnet, daß**
die erste und zweite Demodulations- und Dekodiereinheit (DEM1, DEM2) über Ausgangsklemmen (AK71, AK72) der Datenverarbeitungseinheit (DVE) ansteuerbar, vorzugsweise an- und abschaltbar sind.

20. Transponder nach einem der vorangehenden Ansprüche,
**dadurch gekennzeichnet, daß**
die Datenverarbeitungseinheit einen Mikroprozessor mit einem Speicher aufweist, in dem ein Programm abgelegt ist.

21. Transponder nach Anspruch 20,
**dadurch gekennzeichnet, daß**
der Speicher ein ROM oder EEPROM ist.

## Claims

1. Method for contactless data transfer, with the following stages:
- provision of a transponder with the following features: a receiver unit (EMP) to receive a modulated HF signal, a signal processing unit (SVE) connected downstream from the receiver unit with devices (SR1, SR2, DEM1, DEM2) to process at least two differently modulated and/or coded HF signals, to supply a supply voltage (Uv) and to supply a data signal (DS, DS1, DS2) generated from the modulated HF signal, and a data processing unit (DVE) which can be connected to the supply voltage (Uv) and which can be fed the data signal (DS, DS1, DS2) and which is connected to the signal processing unit (SVE) to set the type of modulation and/or type of coding of the HF signals to be processed;
- setting of the signal processing unit (SVE) to process differently modulated and/or coded HF signals in a time sequence, when a supply voltage (Uv) is present, until receipt of a predefined data signal is detected in the data processing unit (DVE).

2. Method according to Claim 1, **characterised in that** the signal processing unit (SVE) can be set to process ASK 10% modulated signals and ASK 100% modulated signals.

3. Method according to Claim 2, **characterised in that**, when a supply voltage (Uv) is present at the data processing unit (DVE), the signal processing unit (SVE) is first set to process ASK 100% modulated signals.

4. Method according to one of the preceding claims, **characterised in that** the predefined data signal is a request signal transmitted by a write/read unit at predefined time intervals.

5. Method according to one of the preceding claims, **characterised in that** the signal processing unit (SVE) is set to each type of modulation and/or coding for predefined time intervals, until the predefined signal is detected, and this time interval is longer than the time period between two request signals.

6. Method according to one of the preceding claims, **characterised in that** when a supply voltage (Uv) is present at the data processing unit (DVE), a counter starts to operate from a defined initial counter position and that the signal processing unit (SVE) is set to another type of modulation and/or coding, if the predefined signal has not been detected when the end counter position is reached.

7. Method according to one of the preceding claims, **characterised in that** the signal processing unit (SVE) is set cyclically to different types of modulation and/or coding.

8. Method according to one of the preceding claims, **characterised in that** the type of modulation and/or coding is set by activation of demodulation and decoding units (DEM1, DEM2) and voltage regulators (SR1, SR2) in the signal processing unit (SVE).

9. Method according to one of the preceding claims, **characterised in that** the method is controlled by software stored in the data processing unit (DVE).

10. Transponder for a contactless inductive data transfer system, with the following features:
- a receiver unit (EMP) to receive a modulated HF signal;
- a signal processing unit (SVE) connected downstream from the receiver unit (EMP) with a first output terminal pair (AK3, AK4) to supply a supply voltage (Uv) and with at least a second output terminal (AK5) to supply a data signal (DS, DS1, DS2) obtained from the modulated HF signal, where the signal processing unit (SVE) has devices (DEM1, DEM2, SR1, SR2) to process at least two differently modulated and/or coded HF signals;
- a data processing unit (DVE) connected to the output terminal pair (AK3, AK4) of the signal processing unit (SVE), to which the data signal (DS, DS1, DS2) can be fed, and with at least a first output terminal (AK6, AK61, AK62, AK71, AK72), which is connected to the signal processing unit (SVE) to set the type of modulation and/or type of coding of the signals to be processed.

11. Transponder according to Claim 10, **characterised in that** the data processing unit (DVE) has a counter and that the signal processing unit (SVE) can be activated on the basis of the counter position.

12. Transponder according to Claim 10 or 11, **characterised in that** the signal processing unit (SVE) can be activated on the basis of detection of a predefined data signal in the data processing unit (DVE).

13. Transponder according to Claim 12, **characterised in that** the predefined data signal (DS) is a request signal transmitted by a transmission unit to start communication with the transponder.

14. Transponder according to one of the preceding claims, **characterised in that** the receiver has an input oscillation circuit (L, C) and a rectifier (GL).

15. Transponder according to one of the preceding claims, **characterised in that** the signal processing unit (SVE) has a first and second voltage regulator (SR1, SR2) to supply the supply voltage (Uv) and a first and second demodulation and decoding unit (DEM1, DEM2) to supply the data signal (DS1, DS2).

16. Transponder according to one of the preceding claims, **characterised in that** the first voltage regulator (SR1) is configured to process modulated energy signals with a first modulation factor and that the second voltage regulator (SR2) is configured to process modulated energy signals with a second modulation factor.

17. Transponder according to one of the preceding claims, **characterised in that** the first demodulation and decoding unit (DEM1) is configured to process modulated energy signals with a first modulation factor and that the second demodulation and decoding unit (DEM2) is configured to process modulated energy signals with a second modulation factor.

18. Transponder according to Claim 16 or 17, **characterised in that** the modulation of the energy signals is an ASK modulation and the first modulation factor is 100% and the second modulation factor is less than 100%, preferably between 5% and 15%.

19. Transponder according to one of the preceding claims, **characterised in that** the first and second demodulation and decoding units (DEM1, DEM2) can be activated, preferably switched on and off, via output terminals (AK71, AK72) on the data processing unit (DVE).

20. Transponder according to one of the preceding claims, **characterised in that** the data processing unit has a microprocessor with a memory in which a program is stored.

21. Transponder according to Claim 20, **characterised in that** the memory is a ROM or an EEPROM.

## Revendications

1. Procédé de transmission des données sans contact, qui comprend les étapes suivantes :
- mise à disposition d'un transpondeur comportant les caractéristiques suivantes: une unité de réception (EMP) destinée à recevoir un signal haute fréquence modulé, une unité de traitement des signaux (SVE), montée en aval de l'unité de réception et comportant des moyens (SR1, SR2, DEMI, DEM2) destinés à traiter au moins deux signaux haute fréquence modulés et/ou codés différemment, destinés à mettre à disposition une tension d'alimentation (Uv) et destinés à mettre à disposition un signal de données (DS, DS1, DS2) généré à partir du signal haute fréquence modulé, et une unité de traitement des données (DVE) qui peut être raccordée à la tension d'alimentation (Uv), vers laquelle peut être acheminé le signal de données (DS, DS1, DS2) et qui est raccordée à l'unité de traitement des signaux (SVE) pour activer le mode de modulation et/ou le mode de codage des signaux haute fréquence à traiter ;
- commutation d'une unité de traitement des signaux (SVE) vers le mode de traitement des signaux modulés et/ou codés différemment dans une suite d'intervalles de temps à partir du moment où une tension d'alimentation (Uv) est présente, jusqu'à ce que l'unité de traitement des données (DVE) détecte la réception d'un signal de données prédéfini.

2. Procédé selon la revendication 1, **caractérisé en ce que** l'unité de traitement des signaux (SVE) peut être commutée dans le mode de traitement des signaux modulés par ASK10 % et des signaux modulés par ASK100 %.

3. Procédé selon la revendication 2, **caractérisé en ce qu'**à l'application d'une tension d'alimentation (Uv) sur l'unité de traitement des données (DVE), l'unité de traitement des signaux (SVE) est tout d'abord commutée dans le mode de traitement des signaux modulés par ASK100 %.

4. Procédé selon l'une des revendications précédentes, **caractérisé en ce que** le signal de données prédéfini est un signal de demande émis par un poste de lecture/écriture dans des intervalles de temps prédéfinis.

5. Procédé selon l'une des revendications précédentes, **caractérisé en ce que** l'unité de traitement des signaux (SVE) est commutée vers un mode de modulation et/ou un mode de codage pendant des intervalles de temps prédéfinis jusqu'à la détection du signal prédéfini, cet intervalle de temps étant supérieur à l'intervalle de temps entre deux signaux de demande.

6. Procédé selon l'une des revendications précédentes, **caractérisé en ce que** lorsqu'une tension d'alimentation (Uv) est présente sur l'unité de traitement des données (DVE), un compteur commence à compter à partir d'une position initiale définie et **en ce que** l'unité de traitement des signaux (SVE) est commutée vers un autre mode de modulation et/ou mode de codage si le signal prédéfini n'a pas été détecté jusqu'au moment où le compteur atteint une position finale.

7. Procédé selon l'une des revendications précédentes, **caractérisé en ce que** l'unité de traitement des signaux (SVE) est commutée par cycles dans différents modes de modulation et/ou modes de codage.

8. Procédé selon l'une des revendications précédentes, **caractérisé en ce que** la commutation vers le mode de modulation et/ou mode de codage est effectuée dans l'unité de traitement des signaux (SVE) par commande d'unités de démodulation et de décodage (DEM1, DEM2) et de régulateurs de tension (SR1, SR2).

9. Procédé selon l'une des revendications précédentes, **caractérisé en ce que** le déroulement du procédé est commandé par un logiciel stocké dans l'unité de traitement des données (DVE).

10. Transpondeur pour une transmission de données inductive sans contact, qui comprend les caractéristiques suivantes :
- une unité de réception (EMP) destinée à recevoir un signal haute fréquence modulé ;
- une unité de traitement des signaux (SVE) montée en aval de l'unité de réception et comprenant une première paire de bornes de sortie (AK3, AK4) pour mettre à disposition une tension d'alimentation (Uv) et au moins une deuxième borne de sortie (AK5) destinée à mettre à disposition un signal de données (DS, DS1, DS2) généré à partir du signal haute fréquence modulé, l'unité de traitement des signaux (SVE) comportant des moyens (SR1, SR2, DEMI, DEM2) destinés à traiter au moins deux signaux haute fréquence modulés et/ou codés différemment ;
- une unité de traitement des données (DVE), qui est raccordée par l'intermédiaire de la paire de bornes de sortie (AK3, AK4) à l'unité de traitement des signaux (SVE) et vers laquelle peut être acheminé le signal de données (DS, DS1, DS2), et avec au moins une première home de sortie (AK6, AK61, AK62, AK71, AK72) qui est raccordée à l'unité de traitement des signaux (SVE) pour activer le mode de modulation et/ou le mode de décodage des signaux à traiter.

11. Transpondeur selon la revendication 10, **caractérisé en ce que** l'unité de traitement des données (DVE) comporte un compteur et **en ce que** l'unité de traitement des signaux (SVE) peut être commutée en fonction de la position du compteur.

12. Transpondeur selon la revendication 10 ou 11, **caractérisé en ce que** l'unité de traitement des signaux (SVE) peut être commutée en fonction d'une détection d'un signal de données prédéfini dans l'unité de traitement des données (DVE).

13. Transpondeur selon la revendication 12, **caractérisé en ce que** le signal de données (DS) prédéfini est un signal de demande transmis par une unité émettrice en vue d'établir une communication avec le transpondeur.

14. Transpondeur selon l'une des revendications précédentes, **caractérisé en ce que** le récepteur comporte un circuit oscillant d'entrée (L, C) et un redresseur (GL).

15. Transpondeur selon l'une des revendications précédentes, **caractérisé en ce que** l'unité de traitement des signaux (SVE) comporte des premier et deuxième régulateurs de tension (SR1, SR2), destinés à mettre à disposition la tension d'alimentation (Uv) et des première et deuxième unités de démodulation et de décodage (DEM1, DEM2) destinées à mettre à disposition le signal de données (DS1, DS2).

16. Transpondeur selon l'une des revendications précédentes, **caractérisé en ce que** le premier régulateur de tension (SR1) est conçu pour le traitement des signaux d'énergie modulés avec un premier taux de modulation et **en ce que** le deuxième régulateur de tension (SR2) est conçu pour le traitement des signaux d'énergie modulés avec un deuxième taux de modulation.

17. Transpondeur selon l'une des revendications précédentes, **caractérisé en ce que** la première unité de démodulation et de décodage (DEM1) est conçue pour le traitement des signaux d'énergie modulés avec un premier taux de modulation et **en ce que** la deuxième unité de démodulation et de décodage (DEM2) est conçue pour le traitement des signaux d'énergie modulés avec un deuxième taux de modulation.

18. Transpondeur selon la revendication 16 ou 17, **caractérisé en ce que** la modulation des signaux d'énergie est une modulation par déplacement d'amplitude (ASK) et le premier taux de modulation est égal à 100 % et le deuxième taux de modulation est inférieur à 100 %, de préférence entre 5 % et 15 %.

19. Transpondeur selon l'une des revendications précédentes, **caractérisé en ce que** les première et deuxième unités de démodulation et de décodage (DEM1, DEM2) peuvent être commandées, de préférence connectées et déconnectées, par l'intermédiaire de homes de sortie (AK71, AK72) de l'unité de traitement des données (DVE).

20. Transpondeur selon l'une des revendications précédentes, **caractérisé en ce que** l'unité de traitement des données est un microprocesseur comprenant une mémoire, dans laquelle est stocké un programme.

21. Transpondeur selon la revendication 20, **caractérisé en ce que** la mémoire est une mémoire ROM ou EEPROM.
